# EUROPÄISCHE PATENTANMELDUNG

(11) **EP 4 147 865 A1**
(43) Veröffentlichungstag der Anmeldung: **15.03.2023**
(21) Anmeldenummer: 22191703.2
(22) Anmeldetag: 23.08.2022
(51) Int. Cl.: B30B 15/30, B30B 15/08, B65G 65/48, G01F 11/24, G01F 13/00, G01G 13/22, B30B 11/08

(54) **FÜLLEINRICHTUNG ZUM BEFÜLLEN VON KAVITÄTEN EINER RUNDLÄUFERPRESSE SOWIE RUNDLÄUFERPRESSE UND SYSTEM ZUM KONTINUIERLICHEN VERARBEITEN VON PULVERFÖRMIGEN PRODUKTEN**

(30) Priorität: 09.09.2021 DE 102021123339
(71) Anmelder: Fette Compacting GmbH, 21493 Schwarzenbek (DE)
(72) Erfinder: KOLBE, SVEN, 21514 Büchen (DE); LÜDEMANN, Stefan, 21035 Hamburg (DE); NAEVE, Jan, 23899 Gudow (OT Kehrsen) (DE); SCHADE, Frank, 21516 Tramm (DE)
(74) Vertreter: Hauck Patentanwaltspartnerschaft mbB

(57) **Zusammenfassung**

Die Erfindung betrifft eine Fülleinrichtung zum Befüllen von Kavitäten einer Rundläuferpresse, umfassend eine Füllkammer mit einer Einlassöffnung, durch die Füllmaterial in die Füllkammer eintritt, und einer Auslassöffnung, durch die Füllmaterial in die Kavitäten der Rundläuferpresse austritt, wobei in der Füllkammer ein mittels eines Drehantriebs um eine unter einem Winkel zur Vertikalen angeordnete Drehachse drehbares Förderrad angeordnet ist mit einer Mehrzahl von entlang einer Kreisbahn angeordneten Fördertaschen zur Aufnahme von Füllmaterial, wobei die Fördertaschen bei einer Drehung des Förderrads um seine Drehachse entlang der Einlassöffnung und entlang der Auslassöffnung drehen, so dass in den Fördertaschen aufgenommenes Füllmaterial von der Einlassöffnung zur Auslassöffnung gefördert wird. Die Erfindung betrifft außerdem eine Rundläuferpresse sowie ein System zum kontinuierlichen Verarbeiten von pulverförmigen Produkten.

## Beschreibung

Die Erfindung betrifft eine Fülleinrichtung zum Befüllen von Kavitäten einer Rundläuferpresse, umfassend eine Füllkammer mit einer Einlassöffnung, durch die Füllmaterial in die Füllkammer eintritt, und einer Auslassöffnung, durch die Füllmaterial in die Kavitäten der Rundläuferpresse austritt. Die Erfindung betrifft außerdem eine Rundläuferpresse sowie ein System zum kontinuierlichen Verarbeiten von pulverförmigen Produkten.

In Rundläuferpressen wird in der Regel pulverförmiges Füllmaterial in Kavitäten der Matrizenscheibe durch Ober- und Unterstempel zu Presslingen verpresst, beispielsweise Tabletten. Das Füllmaterial wird den Kavitäten mittels einer Fülleinrichtung zugeführt. Es sind unterschiedliche Arten von Fülleinrichtungen bekannt, beispielsweise Dreikammerfüllgeräte, Füllschuhe oder Mehrschichtfüllsysteme. Verbreitet sind Fülleinrichtungen, die einen besonders hohen Volumendurchsatz erreichen und damit eine hohe Produktionsleistung der Rundläuferpresse. Hierdurch wird eine besonders wirtschaftliche Produktion erreicht. Fülleinrichtungen sind beispielsweise bekannt aus EP 2 065 174 B1 oder DE 10 2016 110 556 B4.

Der Aufbau gängiger Fülleinrichtungen ist grundsätzlich ähnlich. Die Fülleinrichtung besitzt regelmäßig eine Füllkammer, die beispielsweise mittels Schwerkraft mit dem Füllmaterial befüllt wird. Eine Pulversäule in einem Zuführrohr steht senkrecht auf der Füllkammer. In der Füllkammer sind ein oder mehrere Rührflügelräder mit Rührflügeln oder dergleichen angeordnet. Durch Rotation der Rührflügelräder wird das Füllmaterial in der Füllkammer verteilt und Materialansammlungen oder Brückenbildung sollen vermieden werden. Anschließend gelangt das Füllmaterial über eine Auslassöffnung der Füllkammer in die Kavitäten. Dies geschieht ebenfalls schwerkraftbedingt. In den Kavitäten wird das Füllmaterial zu Presslingen verarbeitet.

Aus JP 2018 192517 A ist darüber hinaus eine Fülleinrichtung bekannt mit einem Durchgangsabschnitt für Füllmaterial, dessen Boden in Richtung eines Auslasses geneigt ist. Hierdurch soll der Pulvertransport schwerkraftbedingt weiter verbessert werden. In dem Durchgangsabschnitt ist ein rotierendes Rührmesser angeordnet, das das pulverförmige Füllmaterial zum Verbessern des Pulverflusses durchrührt.

Die oben erläuterten Fülleinrichtungen zeigen gute Ergebnisse insbesondere unter dem Gesichtspunkt der Tablettierleistung von Tablettenpressen. Mit zunehmender Verbreitung kontinuierlicher Produktionsverfahren in der Tablettenproduktion steht die reine Tablettierleistung allerdings nicht mehr alleine im Vordergrund. Vielmehr soll der gesamte Wertschöpfungsprozess von den Ausgangsprodukten bis zur Chargenfreigabe betrachtet und bewertet werden. Besonders eine zeitnahe Freigabe von Produktchargen (real-time release) setzt voraus, dass zu jeder Zeit der Ort einzelner Produktpakete innerhalb des Produktstroms bestimmt und vorausgesagt werden kann, um so Pakete, die nicht der Spezifikation entsprechen, ausschleusen zu können. Hier spielen Fülleinrichtungen von Rundläuferpressen eine besondere Rolle. Bei den bekannten Fülleinrichtungen weist das Füllmaterial in der Füllkammer eine hohe Verweilzeit auf. Aufgrund des Durchrührens des Füllmaterials mittels Rührflügelrädern oder Rührmessern erfolgt eine in der Regel kreisförmige, horizontale Verteilung des Füllmaterials in der Füllkammer. Diese Vermischung des Füllmaterials in der Füllkammer in Kombination mit der großen Verweilzeit führt dazu, dass eine Zuordnung von Produktpaketen zu bestimmten Orten oder Zeiten nicht zuverlässig möglich ist. Dies gilt neben der Verweilzeit des Füllmaterials in der Füllkammer auch für die Reihenfolge des Austretens aus der Fülleinrichtung.

Auch kann es durch Rührflügel oder Rührmesser zu einer unerwünschten Vorverdichtung des Füllmaterials in der Fülleinrichtung kommen, und die Struktur des pulverförmigen Füllmaterials kann negativ beeinflusst werden, zum Beispiel zermahlen werden. Gleichzeitig soll ein ausreichendes Durchsatzvolumen erreicht werden, so dass die Fülleinrichtung für eine Massenproduktion in Frage kommt.

Ausgehend von dem erläuterten Stand der Technik liegt der Erfindung daher die Aufgabe zugrunde, eine Fülleinrichtung sowie eine Rundläuferpresse und ein System der eingangs genannten Art bereitzustellen, mit denen die oben genannten Nachteile vermieden werden. Insbesondere soll es möglich sein, den Fortgang von Produktpaketen in der Fülleinrichtung besser verfolgen zu können, während gleichzeitig eine Eignung für eine Massenproduktion vorliegt und das Füllmaterial in seinen Eigenschaften möglichst wenig beeinflusst wird.

Die Erfindung löst die Aufgabe durch den Gegenstand des unabhängigen Anspruchs 1. Vorteilhafte Ausgestaltungen finden sich in den abhängigen Ansprüchen, der Beschreibung und den Figuren.

Für eine Fülleinrichtung der eingangs genannten Art löst die Erfindung die Aufgabe dadurch, dass in der Füllkammer ein mittels eines Drehantriebs um eine unter einem Winkel zur Vertikalen angeordnete Drehachse drehbares Förderrad angeordnet ist mit einer Mehrzahl von entlang einer Kreisbahn angeordneten Fördertaschen zur Aufnahme von Füllmaterial, wobei die Fördertaschen bei einer Drehung des Förderrads um seine Drehachse entlang der Einlassöffnung und entlang der Auslassöffnung drehen, so dass in den Fördertaschen aufgenommenes Füllmaterial von der Einlassöffnung zur Auslassöffnung gefördert wird.

Wie bereits erläutert, dient die Fülleinrichtung zum Befüllen von Kavitäten einer Rundläuferpresse, insbesondere einer Rundläufertablettenpresse. Die Kavitäten können in einer Matrizenscheibe eines Rotors der Rundläuferpresse ausgebildet sein. Die Fülleinrichtung umfasst eine Füllkammer mit einer Einlassöffnung, durch die Füllmaterial in die Füllkammer eintritt. Das Füllmaterial kann pulverförmig sein. Es kann sich auch um eine Materialmischung aus mehreren Bestandteilen handeln, zum Beispiel mindestens einem aktiven pharmazeutischen Bestandteil (API) und mindestens einem Exzipienten. Die Fülleinrichtung kann ein Füllrohr umfassen, dessen Auslass mit der Einlassöffnung der Füllkammer verbunden ist, und durch das Füllmaterial schwerkraftbedingt zur Einlassöffnung gelangt. Das Füllmaterial kann schwerkraftbedingt durch die Einlassöffnung in die Füllkammer fließen. Die Füllkammer weist eine Auslassöffnung auf, durch die das Füllmaterial in die Kavitäten der Rundläuferpresse fließt.

Erfindungsgemäß ist in der Füllkammer ein mittels eines Drehantriebs um eine unter einem Winkel zur Vertikalen angeordnete Drehachse drehbares Förderrad angeordnet. Das Förderrad weist eine Mehrzahl von entlang einer Kreisbahn angeordneten Fördertaschen zur Aufnahme von Füllmaterial auf. Die Fördertaschen drehen bei einer Drehung des Förderrads um seine Drehachse entlang der Einlassöffnung und entlang der Auslassöffnung, so dass in den Fördertaschen aufgenommenes Füllmaterial durch das Förderrad von der Einlassöffnung zur Auslassöffnung gefördert wird. Die Drehachse des Förderrads ist insbesondere schräg zur Vertikalen angeordnet, also in einem Winkelbereich kleiner als 90° und größer als 0°. Der Winkel der Drehachse gegenüber der Vertikalen kann zum Beispiel im Bereich von 30° bis 60° liegen. Durch die nicht horizontale Anordnung des Förderrads wird eine Schrägstellung des Förderrads entlang der Linie Einlassöffnung-Auslassöffnung erreicht. In einem radial äußeren Bereich des Förderrads sind die Fördertaschen ausgebildet, in die das Füllmaterial durch die Einlassöffnung gelangt, beispielsweise schwerkraftbedingt fließt. Die Fördertaschen nehmen jeweils eine durch ihr Volumen definierte Menge an Füllmaterial auf und fördern diese im Zuge der Drehung des Förderrads entlang einer Kreisbahn von der Einlassöffnung zu der Auslassöffnung, von wo das Füllmaterial in die Kavitäten gelangt. Die Füllkammer kann an ihrer Oberseite durch einen Deckel verschlossen sein. Das Förderrad dreht über einem Boden der Füllkammer. Zum Beispiel ein Füllrohr zum Zuführen des Füllmaterials zur Einlassöffnung kann durch einen solchen Deckel hindurchgeführt sein. Der Drehantrieb für das Förderrad kann zum Beispiel ein Elektromotor sein.

Erfindungsgemäß wird der in die Einlassöffnung eintretende Füllmaterialstrom also in dem Volumen der Fördertaschen entsprechende Volumenpakete unterteilt, die dann durch die Fördertaschen zur Auslassöffnung transportiert werden, insbesondere aktiv und definiert. Durch die erfindungsgemäße aktive Förderung des Füllmaterials von der Einlassöffnung zur Auslassöffnung mittels der Fördertaschen wird das Füllmaterial auf kurzem und direktem Weg von der Einlassöffnung zur Auslassöffnung transportiert. Es wird entsprechend eine kurze Verweilzeit des Füllmaterials innerhalb der Füllkammer erreicht. Die in die Kavitäten gefüllte Menge an Füllmaterial kann durch das Förderrad direkt gesteuert und damit kontrolliert werden. Dies gilt auch für den Fülldruck, mit dem das Füllmaterial in die Kavitäten gefördert wird. Durch den zielgerichteten Transport des Füllmaterials werden geringere Kräfte auf das Pulver ausgeübt. Insbesondere ist im Gegensatz zu dem oben erläuterten Stand der Technik kein Rührmesser oder dergleichen zum Auflockern und Verteilen von Füllmaterial erforderlich. Die hiermit verbundenen Nachteile werden vermieden. Durch das kontrollierte aktive Fördern des Füllmaterials, insbesondere der durch die Fördertaschen definierten Volumenpakete, von der Einlassöffnung zur Auslassöffnung mit dem Förderrad wird ein first-in-first-out Prinzip für den Transport des Füllmaterials durch die Füllkammer realisiert. Dies in Kombination mit der kurzen Verweilzeit ermöglicht es, den Fortgang des Füllmaterials in der Fülleinrichtung, insbesondere einzelner Produktpakete, umfassend zum Beispiel ein oder mehrere der Volumenpakete, zuverlässig zu verfolgen. Dadurch wiederum steht die Fülleinrichtung einer Zuordnung von in der Rundläuferpresse hergestellten Presslingen zu bestimmten Füllmaterialpaketen nicht im Wege. Die Füllmenge, die die Auslassöffnung passiert, wird bei der Erfindung nicht zwingend allein durch Schwerkraft bestimmt. Vielmehr besteht durch den aktiven Füllmaterialtransport eine Steuerungsmöglichkeit. Eine kreisförmige, horizontale Verteilung von Füllmaterial in der Füllkammer, wie im Stand der Technik, wird vermieden. Hierdurch wird auch die Gefahr von Pulveransammlungen (Toträumen) vermieden. Die aktiv auf das Füllmaterial ausgeübten Kräfte wirken in Richtung der Auslassöffnung und führen damit nicht zu einer negativen Beeinflussung der Struktur des Füllmaterials. Um die durch die Fördertaschen geförderten Volumenpakete in ihrer Größe auf ein gut förderbares Maß zu reduzieren, ist eine Mehrzahl von Fördertaschen vorgesehen. Das Förderrad kann zum Beispiel mindestens sechs Fördertaschen, weiter vorzugsweise mindestens acht Fördertaschen, insbesondere mehr als acht Fördertaschen aufweisen.

Wie bereits erläutert, dreht das Förderrad über dem Boden der Füllkammer. Der Boden der Füllkammer kann in seiner Form an die Form der Unterseite des Förderrads angepasst sein. Die Anpassung kann zum Beispiel derart sein, dass zwischen der Unterseite des Förderrads und dem Boden der Füllkammer über die gesamte Flächenausdehnung ein im Wesentlichen gleichbleibender Abstand besteht. Da zwangsläufig ein (kleiner) Spalt zwischen dem Boden der Füllkammer und der Unterseite des Förderrads vorhanden sein muss, um einen unerwünschten Kontakt des drehenden Förderrads mit dem Boden der Füllkammer zu vermeiden, kann eine (geringe) Menge an Füllmaterial unter Umständen ohne Aufnahme in Fördertaschen direkt von der Einlassöffnung zu der auf einer geringeren Höhe liegenden Auslassöffnung fließen. Dieser Anteil an von den Fördertaschen nicht gefördertem Füllmaterial ist allerdings sehr klein im Vergleich zu dem durch die Fördertaschen geförderten Anteil. Beispielsweise können mehr als 90 %, vorzugsweise mehr als 95 % des Fördermaterials, durch die Förderaschen gefördert werden. Die Nachverfolgbarkeit des Produkts in der Füllkammer ist daher weiterhin zuverlässig gegeben. Dies gilt auch vor dem Hintergrund der erfindungsgemäß besonders geringen Verweilzeit innerhalb der Füllkammer. So ist ein Verweilzeitunterschied zwischen durch die Fördertaschen von der Einlassöffnung zur Auslassöffnung gefördertem Füllmaterial und möglicherweise auf direktem Wege von der Einlassöffnung zur Auslassöffnung fließendem Füllmaterial sehr gering. Im Stand der Technik liegt die Verweilzeit von Füllmaterial in Füllkammern regelmäßig im Bereich von beispielsweise 1 Minute. Erfindungsgemäß kann die Verweilzeit des Füllmaterials in der Füllkammer dagegen im Bereich weniger Sekunden liegen, zum Beispiel weniger als 5 Sekunden, vorzugsweise weniger als 3 Sekunden.

Die Fördertaschen können nach einer besonders praxisgemäßen Ausgestaltung am Umfang des Förderrads angeordnet sein. Hierdurch wird eine besonders hohe Beschleunigung der Fördertaschen und damit des Füllmaterials erreicht. Dadurch erfolgt eine besonders effektive aktive Förderung des Füllmaterials zur Auslassöffnung.

Gemäß einer weiteren besonders praxisgemäßen Ausgestaltung können die Fördertaschen bei einer Drehung des Förderrads um seine Drehachse unter der Einlassöffnung und über der Auslassöffnung drehen. Dadurch wird ein besonders einfaches Zuführen und Abführen des Füllmaterials erreicht, zumindest unterstützt von der Schwerkraft.

Nach einer weiteren Ausgestaltung kann die Einlassöffnung an einer höchsten Position des Förderrads angeordnet sein und die Auslassöffnung an einer tiefsten Position des Förderrads. Dadurch wird ein gleichmäßiges Fördern des Füllmaterials ohne Bildung von Produktansammlungen oder dergleichen sichergestellt. Entsprechende Toträume werden vermieden.

Das Förderrad kann eine Mehrzahl von seitlichen Wänden aufweisen, wobei benachbarte Wände zwischen sich jeweils eine Fördertasche begrenzen. Die Wände können zum Beispiel in radialer Richtung in Bezug auf die Drehachse des Förderrads ausgerichtet sein. Die Wände können in parallel zur Drehachse liegenden Ebenen liegen.

Nach einer weiteren Ausgestaltung kann die Füllkammer an ihrer Oberseite einen Deckel aufweisen, insbesondere durch einen Deckel verschlossen sein, und ein Abstand bzw. Spalt zwischen dem Förderrad und dem Deckel kann weniger als 5 mm, vorzugsweise weniger als 2 mm, weiter vorzugsweise höchstens 1 mm, betragen. Ein Abstand bzw. Spalt zwischen dem Förderrad und einem Boden der Füllkammer kann weiterhin weniger als 5 mm, vorzugsweise weniger als 2 mm, weiter vorzugsweise weniger als 1 mm, beispielsweise weniger als 0,5 mm, betragen. Durch derart enge Abstände zwischen dem Förderrad und dem Deckel bzw. dem Boden der Füllkammer wird ein besonders großer Anteil an Füllmaterial von den Fördertaschen im Sinne einer aktiven Förderung von der Einlassöffnung zu der Auslassöffnung mitgenommen. Ein möglicherweise unabhängig von der Förderung durch die Fördertaschen zu der Auslassöffnung gelangender Füllmaterialanteil wird minimiert. Die Nachverfolgbarkeit der Füllmaterialförderung wird weiter verbessert. Die Form des Deckels und/oder des Bodens der Füllkammer kann angepasst sein, derart dass der jeweilige Abstand bzw. Spalt zwischen dem Förderrad und dem Deckel bzw. dem Boden möglichst gleichbleibend ist. Sofern sich der Abstand ändert, beziehen sich die obigen Angaben auf einen maximalen Abstand zwischen dem Förderrad und dem Deckel bzw. dem Boden.

Nach einer weiteren Ausgestaltung können die Fördertaschen jeweils an ihrer Oberseite und ihrer Unterseite offen sein. Dadurch erfolgen ein zuverlässiges Einfüllen und Entleeren der Fördertaschen im Zuge der Drehung.

Der Boden der Füllkammer kann nach einer weiteren Ausgestaltung zumindest im von den Fördertaschen überstrichenen Bereich geneigt sein gegenüber einer zur Drehachse senkrechten Ebene. Insbesondere kann der Boden in Richtung der Auslassöffnung geneigt sein. Der Winkel gegenüber der zur Drehachse senkrechten Ebene kann zum Beispiel im Bereich von 10° bis 60°, vorzugsweise 20° bis 40°, liegen. Die Flächen unterhalb der Fördertaschen innerhalb der Füllkammer sind also schräg gestellt mit einem abfallenden Winkel in Richtung der Auslassöffnung. Das Füllmaterial hat daher grundsätzlich das Bestreben, in Richtung der Auslassöffnung zu fließen. Dadurch werden Toträume und Füllmaterialansammlungen noch zuverlässiger vermieden. Das first-in-first-out Prinzip kann noch konsequenter implementiert werden.

Der Boden der Füllkammer kann zumindest im von den Fördertaschen überstrichenen Bereich konisch ausgebildet sein, wobei sich die Konusfläche in Richtung der Drehachse nach unten verjüngt. Der Boden der Füllkammer kann insbesondere eine konkave Form oder wannenförmige Ausgestaltung aufweisen.

Weiterhin kann der Boden der Füllkammer in einem zentralen Bereich senkrecht zur Drehachse ausgebildet sein. Der Boden kann also zum Beispiel kegelstumpfförmig ausgebildet sein.

Das Förderrad kann weiterhin dazu ausgebildet sein, im Zuge seiner Drehung um die Drehachse in den Fördertaschen befindliches Füllmaterial durch Zentrifugalkraft in die Auslassöffnung zu fördern. Dies kann einerseits durch die oben genannte konstruktive Ausgestaltung erreicht werden und andererseits durch eine ausreichende Rotationsgeschwindigkeit des Förderrads. Die Zentrifugalkraft wirkt dabei in Richtung der Auslassöffnung. Es erfolgt somit eine aktive Förderung zur Auslassöffnung, auch unabhängig von der Schwerkraftwirkung. Dadurch wird eine noch definiertere Förderung des Füllmaterials als bei einer reinen Schwerkraftentleerung erreicht. Durch geeignete Einstellung der Zentrifugalkraft kann zum Beispiel die Füllmenge oder der Fülldruck beim Befüllen der Kavitäten in gewünschter Weise eingestellt werden. Die erzeugte Zentrifugalkraft ist dabei insbesondere unabhängig von anderen Maschinenparametern der Rundläuferpresse, zum Beispiel der Rotordrehzahl. Sie ist vielmehr in einfacher Weise durch geeignete Einstellung der Drehzahl des Förderrads steuerbar.

Der Förderweg des Füllmaterials von der Einlassöffnung zu der Auslassöffnung kann in der erfindungsgemäßen Fülleinrichtung derart sein, dass jede Umlenkung der Fließrichtung des Füllmaterials kleiner als 90° ist. Indem etwaige Umlenkwinkel des Füllmaterials kleiner als 90° sind, werden eine besonders schonende Umlenkung und damit ein besonders schonender Transport des Füllmaterials durch die Fülleinrichtung erreicht. Negative Beeinflussungen des Füllmaterials werden besonders sicher vermieden.

Nach einer weiteren Ausgestaltung kann eine Steuereinrichtung vorgesehen sein, die dazu ausgebildet ist, die den Kavitäten zugeführte Füllmaterialmenge und/oder den Fülldruck beim Befüllen der Kavitäten mit Füllmaterial durch Ansteuern des Drehantriebs zu steuern, insbesondere durch Einstellen der Drehzahl des Drehantriebs und damit des Förderrads. Damit können die Füllmenge und der Fülldruck in gewünschter Weise präzise und unabhängig von anderen Maschinenparametern, beispielsweise der Rotordrehzahl der Rundläuferpresse, eingestellt werden.

Die Erfindung löst die Aufgabe außerdem durch eine Rundläuferpresse umfassend einen mittels eines Rotordrehantriebs drehbaren Rotor, wobei der Rotor eine obere Stempelführung für obere Pressstempel der Rundläuferpresse und eine untere Stempelführung für untere Pressstempel der Rundläuferpresse sowie eine zwischen den Stempelführungen angeordnete Matrizenschreibe aufweist, wobei die Pressstempel mit Kavitäten der Matrizenscheibe zusammenwirken, weiter umfassend eine erfindungsgemäße Fülleinrichtung, durch die zu verpressendes Füllmaterial in die Kavitäten der Matrizenscheibe gefüllt wird, weiter umfassend mindestens eine obere Druckeinrichtung und mindestens eine untere Druckeinrichtung, die im Betrieb mit den oberen Pressstempeln und mit den unteren Pressstempeln zum Verpressen des Füllmaterials in den Kavitäten der Matrizenscheibe zu Presslingen zusammenwirken, und umfassend eine Auswurfeinrichtung, in der in den Kavitäten erzeugte Presslinge aus der Rundläuferpresse ausgeworfen werden.

Derartige Rundläuferpressen sind dem Fachmann an sich bekannt. Die in der Matrizenscheibe ausgebildeten Kavitäten können beispielsweise durch Bohrungen der Matrizenscheibe oder durch in die Matrizenscheibe eingesetzte Matrizenhülsen gebildet sein. Die Matrizenscheibe kann einstückig ringförmig ausgebildet sein oder aus mehreren Ringsegmenten zusammengesetzt sein. Das durch die erfindungsgemäße Fülleinrichtung in die Kavitäten gefüllte Füllmaterial wird nachfolgend durch den Kavitäten zugeordnete obere und untere Pressstempel durch Zusammenwirken mit einer oberen und unteren Druckeinrichtung zu Presslingen, insbesondere Tabletten, verpresst. Nachfolgend werden die Presslinge durch axiales Verfahren der unteren Pressstempel nach oben auf die Oberseite der Matrizenscheibe gefördert, von wo sie beispielsweise durch eine Abstreifeinrichtung der Auswurfeinrichtung zugeführt werden, die zu einem Auslass der Rundläuferpresse führt.

Die Erfindung löst die Aufgabe außerdem durch ein System zum kontinuierlichen Verarbeiten von pulverförmigen Produkten, umfassend mindestens zwei Systemeinlässe für pulverförmige Produkte, einen Mischer zum kontinuierlichen Mischen der pulverförmigen Produkte, wobei der Mischer mindestens einen mit den mindestens zwei Systemeinlässen verbundenen Mischereinlass aufweist, und wobei der Mischer einen Mischerauslass für aus den pulverförmigen Produkten gemischtes Füllmaterial aufweist, weiter umfassend eine erfindungsgemäße Rundläuferpresse zum kontinuierlichen Verarbeiten des Füllmaterials zu Presslingen, wobei die Rundläuferpresse einen mit dem Mischerauslass verbundenen Presseneinlass und einen Pressenauslass für in der Rundläuferpresse erzeugte Presslinge aufweist.

Das System dient zum kontinuierlichen Verarbeiten von insbesondere pulverförmigen Produkten, insbesondere trockenen pulverförmigen Produkten. Wie bereits erläutert, kann es sich hierbei zum Beispiel um pharmazeutische Produkte handeln. So können die pulverförmigen Produkte zum Beispiel mindestens einen aktiven pharmazeutischen Bestandteil (API) und mindestens einen Exzipienten umfassen. Die pulverförmigen Produkte werden dem System über mindestens zwei, beispielsweise mehr als zwei, Systemeinlässe zugeführt. Die Systemeinlässe können jeweils einen Dosierer umfassen, mit denen die Zuführung der Produkte dosiert wird. Über Verbindungsleitungen werden die über die Systemeinlässe zugeführten pulverförmigen Produkte kontinuierlich dem mindestens einen Mischereinlass zugeführt. Der Mischer erzeugt aus den zugeführten pulverförmigen Produkten kontinuierlich eine Produktmischung, nämlich das Füllmaterial, zur weiteren Verarbeitung in der Rundläuferpresse. Die Produktmischung, also das Füllmaterial, wird am Mischerauslass bereitgestellt und beispielsweise durch eine Fördereinrichtung kontinuierlich dem Presseneinlass der Rundläuferpresse zugeführt. Es wird darauf hingewiesen, dass sich das kontinuierliche Zuführen insbesondere auf eine kontinuierliche Verarbeitung im Gegensatz zu einem an sich bekannten Batch-Prozess bezieht. Das kontinuierliche Zuführen umfasst insbesondere auch eine intermittierende Zuführung, wie sie zum Beispiel durch pneumatische Fördereinrichtungen erfolgt. Die durch die Rundläuferpresse aus dem Füllmaterial hergestellten Presslinge, insbesondere Tabletten, werden am Pressenauslass der Rundläuferpresse bereitgestellt. Es kann dann eine weitere Verarbeitung erfolgen zum Beispiel ein Entstauben und/oder Verpacken.

Das System ist ein kontinuierlich arbeitendes System, das also anders als ein nach dem Batch-Prinzip arbeitendes System die zugeführten pulverförmigen Produkte kontinuierlich mischt und zu Presslingen, insbesondere Tabletten, verarbeitet. Das System kann contained sein, zum Beispiel mit einem Containment Level OEB 3 oder höher, gemessen zum Beispiel nach dem SMEPAC-Test (Standardized Measurement for Equipment Particulate Airborne Concentrations).

Ein Ausführungsbeispiel der Erfindung wird nachfolgend anhand von Figuren näher erläutert. Es zeigen schematisch:
- Figur 1: ein erfindungsgemäßes System zum kontinuierlichen Verarbeiten von pulverförmigen Produkten in einer perspektivischen Ansicht,
- Figur 2: eine Rundläuferpresse des in Figur 1 gezeigten Systems in einer abgewickelten Darstellung des Rotors,
- Figur 3: eine erfindungsgemäße Fülleinrichtung in einer ersten perspektivischen Ansicht,
- Figur 4: die Fülleinrichtung aus Figur 3 mit entferntem Deckel der Füllkammer,
- Figur 5: die in Figur 3 gezeigte Fülleinrichtung in einer Schnittansicht,
- Figur 6: die Fülleinrichtung aus Figur 3 in einer perspektivischen Ansicht von unten, und
- Figur 7: die Füllkammer der Fülleinrichtung aus Figur 3 mit entferntem Förderrad.

Soweit nichts anderes angegeben ist, bezeichnen in den Figuren gleiche Bezugszeichen gleiche Gegenstände.

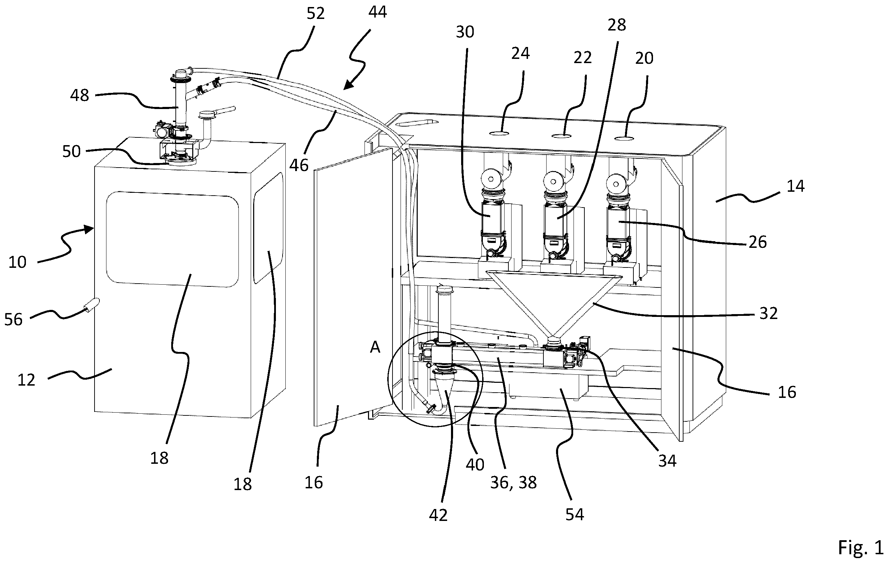

In Figur 1 ist ein System zum kontinuierlichen Verarbeiten von pulverförmigen Produkten gezeigt, umfassend eine Rundläuferpresse 10, vorliegend eine Rundläufertablettenpresse 10. Die Rundläufertablettenpresse 10 ist in einem Gehäuse 12 angeordnet. Ein Modulgehäuse 14 ist neben der Rundläufertablettenpresse 10 auf demselben Boden angeordnet. In Figur 1 ist das Modulgehäuse 14 aus Veranschaulichungsgründen mit geöffneten Türen 16 dargestellt. Das Gehäuse 12 der Rundläufertablettenpresse 10 weist Fenster 18 auf, die für einen Zugang zu der Rundläufertablettenpresse 10 ebenfalls geöffnet werden können.

Das Modulgehäuse 14 weist an seiner Oberseite drei Systemeinlässe 20, 22, 24 auf, über die pulverförmige Produkte zugeführt werden können, zum Beispiel aktive pharmazeutische Bestandteile und/oder Exzipienten. Jeder der Einlässe 20, 22, 24 weist eine Dosiereinrichtung 26, 28, 30 auf, über die die zugeführten pulverförmigen Produkte dosiert werden. Stromab der Einlässe 20, 22, 24 mit den Dosiereinrichtungen 26, 28, 30 befindet sich im dargestellten Beispiel ein Zuführtrichter 32, dem die über die Einlässe 20, 22, 24 und die Dosiereinrichtungen 26, 28, 30 zugeführten pulverförmigen Produkte zugeleitet werden. Der Auslass des Zuführtrichters 32 ist mit einem Mischereinlass 34 eines Mischers 36 verbunden. Der Mischer 36 weist ein in dem dargestellten Beispiel horizontales Mischerrohr 38 auf, in dem eine Mischeinrichtung angeordnet ist, beispielsweise eine drehbare Mischschnecke. In dem Mischerrohr 38 werden die über den Zuführtrichter 32 zugeführten pulverförmigen Produkte zu einer Produktmischung, nämlich einem Füllmaterial, gemischt, die an einem Mischerauslass 40 des Mischers zur Verfügung gestellt wird. Der Mischerauslass 40 steht in Verbindung mit einem im dargestellten Beispiel trichterförmigen Förderreservoir 42 einer Fördereinrichtung 44. Die Fördereinrichtung 44 umfasst weiterhin einen mit dem Auslass des Förderreservoirs 42 verbundenen Förderschlauch 46, dessen anderes Ende über einen Auslasshopper 48 mit einem Presseneinlass 50 an der Oberseite des Gehäuses 12 der Rundläufertablettenpresse 10 verbunden ist. Im dargestellten Beispiel handelt es sich bei der Fördereinrichtung 44 um eine pneumatische Vakuumfördereinrichtung 44. Entsprechend weist die Fördereinrichtung 44 einen Vakuumschlauch 52 und eine Vakuumerzeugungseinheit 54 auf. Die Vakuumerzeugungseinheit 54 erzeugt über den Vakuumschlauch 52 ein Vakuum am Auslass des Förderschlauchs 46, durch welches die in dem Förderreservoir 42 befindliche Produktmischung durch den Förderschlauch 46 in den Auslasshopper 48 und zum Presseneinlass 50 der Rundläufertablettenpresse 10 gefördert wird. Dazu öffnet ein Auslassventil am Auslass des Förderschlauchs 46 intermittierend und schließt nach Auslass der jeweils geförderten Produktmenge wieder. Anschließend wird dieser Zyklus wiederholt, so dass die Produktmischung aus dem Förderreservoir 42 intermittierend von dem auf einem vertikal niedrigeren Niveau befindlichen Mischerauslass 40 zu dem auf einem vertikal höheren Niveau angeordneten Presseneinlass 50 der Rundläufertablettenpresse 10 gefördert wird. In der Rundläufertablettenpresse 10 werden aus der das Füllmaterial bildenden zugeführten Produktmischung in nachfolgend noch näher erläuterter Weise Tabletten hergestellt, wobei die Tabletten an einem Pressenauslass 56 der Rundläufertablettenpresse 10 ausgegeben werden, wo sie einer weiteren Verarbeitung zugeführt werden können, zum Beispiel einem Entstauben und/oder Verpacken.

Das in Figur 1 dargestellte System dient zum kontinuierlichen Verarbeiten von pulverförmigen Produkten zu in der Rundläuferpresse 10 hergestellten Presslingen, im dargestellten Beispiel insbesondere zu in der Rundläufertablettenpresse 10 gepressten Tabletten. Das System kann contained sein, wie oben erläutert.

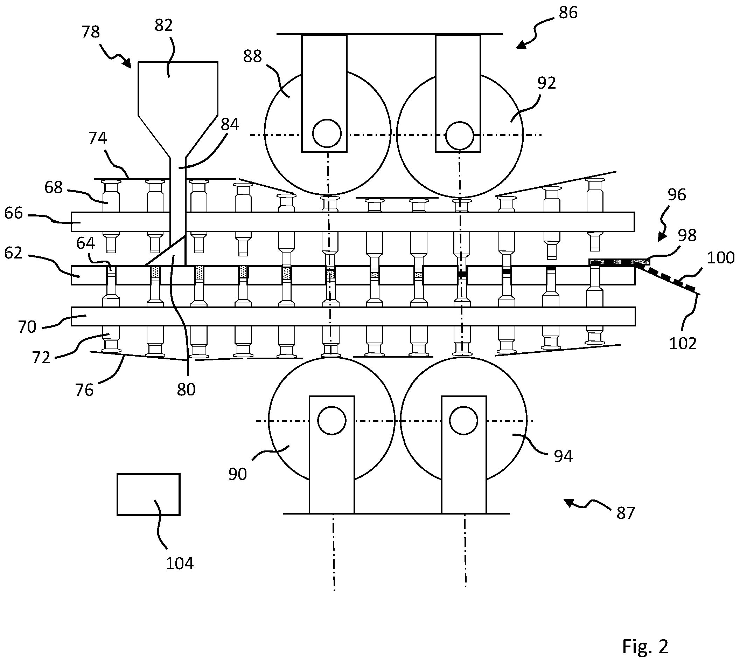

In Figur 2 ist eine beispielsweise bei dem in Figur 1 gezeigten System eingesetzte Rundläufertablettenpresse 10 in einer abgewickelten Darstellung des Rotors gezeigt. Die in Figur 2 gezeigte Rundläufertablettenpresse umfasst einen durch einen nicht näher dargestellten Drehantrieb drehend angetriebenen Rotor mit einer Matrizenscheibe 62, die eine Mehrzahl von Kavitäten 64 aufweist. Die Kavitäten 64 können beispielsweise durch Bohrungen der Matrizenscheibe 62 gebildet sein. Weiter umfasst der Rotor eine Mehrzahl von in einer oberen Stempelführung 66 geführten oberen Pressstempeln 68 und eine Mehrzahl von in einer unteren Stempelführung 70 geführten unteren Pressstempeln 72, die mit der Matrizenscheibe 62 synchron umlaufen. Jeweils ein Paar aus oberem Pressstempel 68 und unterem Pressstempel 72 ist einer Kavität 64 zugeordnet. Die axiale Bewegung der oberen Pressstempel 68 und unteren Pressstempel 72 im Zuge der Drehung des Rotors wird durch obere Steuerkurvenelemente 74 und untere Steuerkurvenelemente 76 gesteuert. Die Rundläufertablettenpresse umfasst weiterhin eine erfindungsgemäße Fülleinrichtung 78. Die Fülleinrichtung 78 umfasst ein trichterförmiges Füllmaterialreservoir 82, das über ein Füllrohr 84 mit einer Füllkammer 80 in Verbindung steht. Auf diese Weise gelangt in dem vorliegenden Beispiel pulverförmiges Füllmaterial über das Füllrohr 84 schwerkraftbedingt in die Füllkammer 80 und aus dieser in die Kavitäten 64 der Matrizenscheibe 62. Außerdem umfasst die Rundläufertablettenpresse eine obere Druckeinrichtung 86 und eine untere Druckeinrichtung 87. Die obere Druckeinrichtung 86 besitzt eine obere Vordruckeinrichtung mit einer oberen Vordruckrolle 88 und die untere Druckeinrichtung umfasst eine untere Vordruckeinrichtung mit einer unteren Vordruckrolle 90. Weiterhin umfasst die obere Druckeinrichtung 86 eine obere Hauptdruckeinrichtung mit einer oberen Hauptdruckrolle 92 und die untere Druckeinrichtung 87 umfasst eine untere Hauptdruckeinrichtung mit einer unteren Hauptdruckrolle 94. Beim Durchlaufen der Druckeinrichtungen 86, 87 werden die oberen und unteren Pressstempel 68, 72 in die Kavitäten 64 gedrückt und verpressen dabei das in die Kavitäten 64 gefüllte Füllmaterial zu Tabletten 100. Weiter umfasst die Rundläufertablettenpresse eine Auswurfeinrichtung 96, vorliegend mit einem Abstreifer 98, der die in der Rundläuferpresse hergestellten und durch die unteren Pressstempel 72 auf die Oberseite der Matrizenscheibe 62 geförderten Tabletten 100 einem Tablettenablauf 102 zuführt.

Eine Steuereinrichtung 104 steuert den Betrieb der Rundläuferpresse und ist über nicht näher dargestellte Leitungen unter anderem mit dem Drehantrieb des Rotors verbunden.

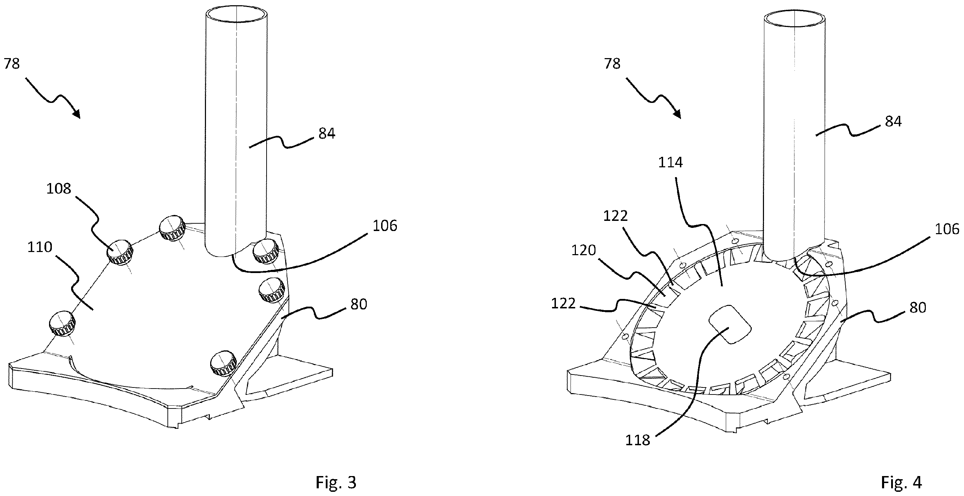

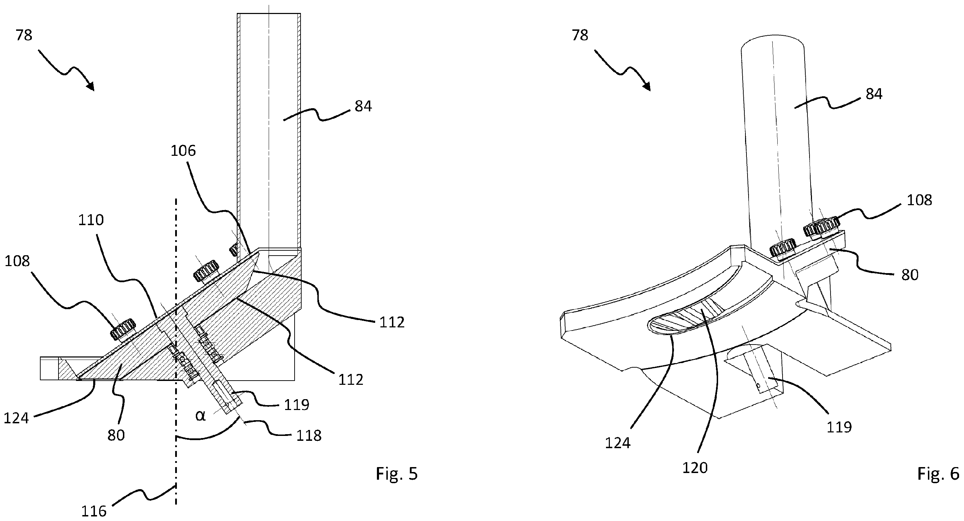

Anhand der Figuren 3 bis 6 soll die Ausgestaltung der erfindungsgemäßen Fülleinrichtung 78 näher erläutert werden. Das untere Ende des Füllrohrs 84 bildet eine Einlassöffnung 106 der Füllkammer 80, über die das Füllmaterial aus dem Füllrohr 84 schwerkraftbedingt in die Füllkammer 80 eintritt. Die Füllkammer 80 ist an ihrer Oberseite durch einen mittels Schraubverbindungen 108 befestigten Deckel 110 verschlossen. In Figur 4 ist der Deckel 110 aus Veranschaulichungsgründen nicht dargestellt. Wie in den Figuren zu erkennen, ist die Füllkammer 80 unter einem Winkel schräg zur Horizontalen angeordnet, beispielsweise unter einem Winkel zwischen 30° und 60°. Wie insbesondere in der Schnittansicht der Figur 5 zu erkennen, ist der Boden 112 der Füllkammer kegelstumpfförmig ausgebildet. In der Füllkammer 80 ist ein Förderrad 114 um eine unter einem Winkel α (siehe Figur 5) zur Vertikalen 116 ausgerichteten Drehachse 118 mittels eines nicht näher dargestellten Drehantriebs, beispielsweise eines Elektromotors, um eine Antriebswelle 119 drehbar angeordnet. Der Winkel α kann beispielsweise in einem Bereich zwischen 30° und 60° liegen. Das Förderrad 114 weist an seinem radial äußeren Umfang eine Mehrzahl von entlang einer Kreisbahn angeordneten Fördertaschen 120 auf, die jeweils durch benachbarte Seitenwände 122 begrenzt und an ihrer Ober- und Unterseite offen sind. Das Füllrohr 84 ist so angeordnet, dass Füllmaterial aus dem Füllrohr 84 über die Einlassöffnung 106 in die Fördertaschen 120 des unterhalb der Einlassöffnung 106 drehenden Förderrads 114 fällt, so dass das in den Fördertaschen 120 aufgenommene Füllmaterial entlang der Kreisbahn weiter gefördert wird, zu einer an der Unterseite der Füllkammer 80 angeordneten Auslassöffnung 124 (siehe Figur 6).

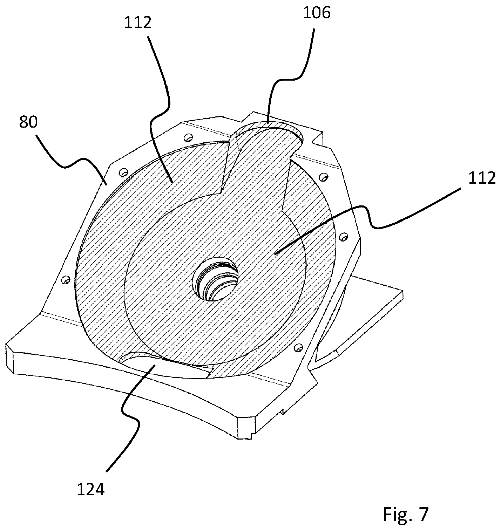

Auf diese Weise wird das Füllmaterial durch die Förderaschen 120 aktiv von der Einlassöffnung 106 zu der Auslassöffnung 124 gefördert. Die Einlassöffnung 106 ist an einer höchsten Position des Förderrads 114 angeordnet und die Auslassöffnung 124 an einer tiefsten Position des Förderrads 114. Wie insbesondere in den Figuren 4 und 5 zu erkennen, ist der Boden 112 der Füllkammer 80 in dem von den Fördertaschen 120 überstrichenen Bereich geneigt gegenüber einer zur Drehachse 118 senkrechten Ebene ausgebildet, gemäß der oben erläuterten Kegelstumpfform. Die durch den Kegelstumpf erreichte wannenförmige Ausgestaltung der Füllkammer 80 ist in Figur 7 besonders gut zu erkennen, in der aus Veranschaulichungsgründen neben dem Füllrohr 84 und dem Deckel 110 auch das Förderrad 114 nicht dargestellt ist. Dadurch werden Produktansammlungen und Toträume in den Fördertaschen 120 sicher vermieden. Das in den Fördertaschen 120 aufgenommene Füllmaterial wird dabei im Zuge der Drehung des Förderrads 114 durch Zentrifugalkraft in die Auslassöffnung 124 und damit in die Kavitäten 64 der Rundläuferpresse 10 gefördert. Wie beispielsweise aus Figur 5 zu erkennen, ist der Förderweg des Füllmaterials von der Einlassöffnung 106 zu der Auslassöffnung 124 dabei derart, dass Umlenkungen der Fließrichtung des Füllmaterials jeweils kleiner als 90° sind.

Eine Steuereinrichtung, beispielsweise die Steuereinrichtung 104 der Rundläuferpresse 10, kann den Drehantrieb des Förderrads 114, insbesondere seine Drehzahl, und damit die Drehzahl des Förderrads 114, ansteuern, um die den Kavitäten 64 zugeführte Füllmaterialmenge und/oder den Fülldruck beim Befüllen der Kavitäten 64 mit Füllmaterial in geeigneter Weise zu steuern.

### Bezugszeichenliste

- 10: Rundläufertablettenpresse
- 12: Gehäuse
- 14: Modulgehäuse
- 16: Türen
- 18: Fenster
- 20: Systemeinlass
- 22: Systemeinlass
- 24: Systemeinlass
- 26: Dosiereinrichtung
- 28: Dosiereinrichtung
- 30: Dosiereinrichtung
- 32: Zuführtrichter
- 34: Mischereinlass
- 36: Mischer
- 38: Mischerrohr
- 40: Mischerauslass
- 42: Förderreservoir
- 44: Fördereinrichtung
- 46: Förderschlauch
- 48: Auslasshopper
- 50: Presseneinlass
- 52: Vakuumschlauch
- 54: Vakuumerzeugungseinheit
- 56: Pressenauslass
- 62: Matrizenscheibe
- 64: Kavitäten
- 66: obere Stempelführung
- 68: obere Pressstempel
- 70: untere Stempelführung
- 72: untere Pressstempel
- 74: obere Steuerkurvenelemente
- 76: untere Steuerkurvenelemente
- 78: Fülleinrichtung
- 80: Füllkammer
- 82: Füllmaterialreservoir
- 84: Füllrohr
- 86: obere Druckeinrichtung
- 87: untere Druckeinrichtung
- 88: obere Vordruckrolle
- 90: untere Vordruckrolle
- 92: obere Hauptdruckrolle
- 94: untere Hauptdruckrolle
- 96: Auswurfeinrichtung
- 98: Abstreifer
- 100: Tabletten
- 102: Tablettenablauf
- 104: Steuereinrichtung
- 106: Einlassöffnung
- 108: Schraubverbindungen
- 110: Deckel
- 112: Boden
- 114: Förderrad
- 116: Vertikale
- 118: Drehachse
- 119: Antriebswelle
- 120: Fördertaschen
- 122: Seitenwände
- 124: Auslassöffnung

## Patentansprüche

1. Fülleinrichtung zum Befüllen von Kavitäten (64) einer Rundläuferpresse (10), umfassend eine Füllkammer (80) mit einer Einlassöffnung (106), durch die Füllmaterial in die Füllkammer (80) eintritt, und einer Auslassöffnung (124), durch die Füllmaterial in die Kavitäten (64) der Rundläuferpresse (10) austritt, **dadurch gekennzeichnet, dass** in der Füllkammer (80) ein mittels eines Drehantriebs um eine unter einem Winkel (a) zur Vertikalen (116) angeordnete Drehachse (118) drehbares Förderrad (114) angeordnet ist mit einer Mehrzahl von entlang einer Kreisbahn angeordneten Fördertaschen (120) zur Aufnahme von Füllmaterial, wobei die Fördertaschen (120) bei einer Drehung des Förderrads (114) um seine Drehachse (118) entlang der Einlassöffnung (106) und entlang der Auslassöffnung (124) drehen, so dass in den Fördertaschen (120) aufgenommenes Füllmaterial von der Einlassöffnung (106) zur Auslassöffnung (124) gefördert wird.

2. Fülleinrichtung nach Anspruch 1, **dadurch gekennzeichnet, dass** die Fördertaschen (120) am Umfang des Förderrads (114) angeordnet sind.

3. Fülleinrichtung nach Anspruch 2, **dadurch gekennzeichnet, dass** die Fördertaschen (120) bei einer Drehung des Förderrads (114) um seine Drehachse (118) unter der Einlassöffnung (106) und über der Auslassöffnung (124) drehen.

4. Fülleinrichtung nach einem der vorhergehenden Ansprüche, **dadurch gekennzeichnet, dass** die Einlassöffnung (106) an einer höchsten Position des Förderrads (114) angeordnet ist, und dass die Auslassöffnung (124) an einer tiefsten Position des Förderrads (114) angeordnet ist.

5. Fülleinrichtung nach einem der vorhergehenden Ansprüche, **dadurch gekennzeichnet, dass** die Fördertaschen (120) jeweils an ihrer Oberseite und an ihrer Unterseite offen sind.

6. Fülleinrichtung nach einem der vorhergehenden Ansprüche, **dadurch gekennzeichnet, dass** das Förderrad (114) eine Mehrzahl von seitlichen Wänden (122) aufweist, wobei benachbarte Wände (122) zwischen sich jeweils eine Fördertasche (120) begrenzen.

7. Fülleinrichtung nach einem der vorhergehenden Ansprüche, **dadurch gekennzeichnet, dass** die Füllkammer (80) an ihrer Oberseite einen Deckel (110) aufweist, und dass ein Abstand zwischen dem Förderrad (114) und dem Deckel (110) weniger als 5 mm, vorzugsweise weniger als 2 mm, weiter vorzugsweise höchstens 1 mm, beträgt.

8. Fülleinrichtung nach einem der vorhergehenden Ansprüche, **dadurch gekennzeichnet, dass** ein Abstand zwischen dem Förderrad (114) und einem Boden (112) der Füllkammer (80) weniger als 5 mm, vorzugsweise weniger als 2 mm, weiter vorzugsweise weniger als 1 mm, beträgt.

9. Fülleinrichtung nach einem der vorhergehenden Ansprüche, **dadurch gekennzeichnet, dass** ein Boden (112) der Füllkammer (80) zumindest im von den Fördertaschen (120) überstrichenen Bereich geneigt gegenüber einer zur Drehachse (118) senkrechten Ebene ausgebildet ist.

10. Fülleinrichtung nach Anspruch 9, **dadurch gekennzeichnet, dass** der Boden (112) der Füllkammer (80) zumindest im von den Fördertaschen (120) überstrichenen Bereich konisch ausgebildet ist.

11. Fülleinrichtung nach einem der vorhergehenden Ansprüche, **dadurch gekennzeichnet, dass** der Boden (112) der Füllkammer (80) in einem zentralen Bereich senkrecht zur Drehachse (118) ausgebildet ist.

12. Fülleinrichtung nach einem der vorhergehenden Ansprüche, **dadurch gekennzeichnet, dass** das Förderrad (114) dazu ausgebildet ist, im Zuge seiner Drehung um die Drehachse (118) in den Fördertaschen (120) befindliches Füllmaterial durch Zentrifugalkraft in die Auslassöffnung (124) zu fördern.

13. Fülleinrichtung nach einem der vorhergehenden Ansprüche, **dadurch gekennzeichnet, dass** der Förderweg des Füllmaterials von der Einlassöffnung (106) zu der Auslassöffnung (124) derart ist, dass jede Umlenkung der Fließrichtung des Füllmaterials kleiner als 90° ist.

14. Fülleinrichtung nach einem der vorhergehenden Ansprüche, **dadurch gekennzeichnet, dass** eine Steuereinrichtung (104) vorgesehen ist, die dazu ausgebildet ist, die den Kavitäten (64) zugeführte Füllmaterialmenge und/oder den Fülldruck beim Befüllen der Kavitäten (64) mit Füllmaterial durch Ansteuern des Drehantriebs zu steuern.

15. Rundläuferpresse umfassend einen mittels eines Rotordrehantriebs drehbaren Rotor, wobei der Rotor eine obere Stempelführung (66) für obere Pressstempel (68) der Rundläuferpresse (10) und eine untere Stempelführung (70) für untere Pressstempel (72) der Rundläuferpresse (10) sowie eine zwischen den Stempelführungen (66, 70) angeordnete Matrizenschreibe (62) aufweist, wobei die Pressstempel (68, 72) mit Kavitäten (64) der Matrizenscheibe (62) zusammenwirken, weiter umfassend eine Fülleinrichtung (78) nach einem der vorhergehenden Ansprüche, durch die zu verpressendes Füllmaterial in die Kavitäten (64) der Matrizenscheibe (62) gefüllt wird, weiter umfassend mindestens eine obere Druckeinrichtung (86) und mindestens eine untere Druckeinrichtung (87), die im Betrieb mit den oberen Pressstempeln (68) und mit den unteren Pressstempeln (72) zum Verpressen des Füllmaterials in den Kavitäten (64) der Matrizenscheibe (62) zu Presslingen zusammenwirken, und umfassend eine Auswurfeinrichtung (96), in der in den Kavitäten (64) erzeugte Presslinge aus der Rundläuferpresse (10) ausgeworfen werden.

16. System zum kontinuierlichen Verarbeiten von pulverförmigen Produkten, umfassend mindestens zwei Systemeinlässe (20, 22, 24) für pulverförmige Produkte, einen Mischer (36) zum kontinuierlichen Mischen der pulverförmigen Produkte, wobei der Mischer (36) mindestens einen mit den mindestens zwei Systemeinlässen (20, 22, 24) verbundenen Mischereinlass (34) aufweist, und wobei der Mischer (36) einen Mischerauslass (40) für aus den pulverförmigen Produkten gemischtes Füllmaterial aufweist, weiter umfassend eine Rundläuferpresse (10) nach Anspruch 15 zum kontinuierlichen Verarbeiten des Füllmaterials zu Presslingen, wobei die Rundläuferpresse (10) einen mit dem Mischerauslass (40) verbundenen Presseneinlass (50) und einen Pressenauslass (56) für in der Rundläuferpresse (10) erzeugte Presslinge aufweist.
